# EUROPÄISCHE PATENTSCHRIFT

(11) **EP 3 833 550 B1**
(45) Veröffentlichungstag und Bekanntmachung des Hinweises auf die Patenterteilung: **07.09.2022**
(21) Anmeldenummer: 19737096.8
(22) Anmeldetag: 08.07.2019
(51) Int. Cl.: B60C 1/00, B60C 11/00, C08L 21/00

(54) **FAHRZEUGLUFTREIFEN UND KAUTSCHUKMISCHUNG FÜR EINEN LAUFSTREIFEN**
VEHICLE PNEUMATIC TYRE AND RUBBER MIXTURE FOR A TREAD
PNEUMATIQUE DE VÉHICULE ET MÉLANGE DE CAOUTCHOUC POUR UNE BANDE DE ROULEMENT

(30) Priorität: 10.08.2018 DE 102018213472
(43) Veröffentlichungstag der Anmeldung: 16.06.2021
(73) Patentinhaber: Continental Reifen Deutschland GmbH, 30165 Hannover (DE)
(72) Erfinder: WEBER, Christian, 30165 Hannover (DE); MÜLLER, Norbert, 30165 Hannover (DE); RODRIGUES, Pedro-Nuno, 30165 Hannover (DE)
(74) Vertreter: Continental Corporation
(86) Internationale Anmeldenummer: PCT/EP2019/068202
(87) Internationale Veröffentlichungsnummer: WO 2020/030354

(56) Entgegenhaltungen:
- EP-A1- 1 990 217
- EP-A1- 2 565 056
- EP-A2- 1 745 946
- WO-A1-2016/087078
- WO-A1-2019/102148
- US-A1- 2010 230 021

## Beschreibung

Die Erfindung betrifft einen Fahrzeugluftreifen in Radialbauart mit einem profilierten Laufstreifen mit in Umfangsrichtung umlaufenden Profilblockreihen und/oder Profilrippen, wobei der Laufstreifen einschichtig oder mehrschichtig mit einer radial äußersten Laufstreifenschicht ausgeführt ist, welche sich zumindest über die Breite der Bodenaufstandsfläche erstreckt, wobei der Laufstreifen bzw. seine radial äußerste Laufstreifenschicht aus einem Gummimaterial mit einer Shore A-Härte bei Raumtemperatur gemäß DIN ISO 7619-1 von 40 ShA bis 55 ShA besteht.

Ein derartiger Fahrzeugluftreifen ist beispielsweise aus der WO 2016 087 078 A1 bekannt. Der Fahrzeugluftreifen weist einen Laufstreifen mit einer Laufstreifenbase und einer die Profilierung aufweisenden zweischichtigen Laufstreifencap mit einer radial äußeren Capschicht und einer radial inneren Capschicht auf. Das Gummimaterial der radial inneren Capschicht weist einen größeren dynamischen Speichermodul bei 55°C als das Gummimaterial der radial äußeren Capschicht auf, wobei das Gummimaterial beider Capschichten übereinstimmende Shore-A-Härten aufweist, wodurch der Zielkonflikt zwischen einem geringen Rollwiderstand und einer guten Schneeperformance gelöst werden soll. Bevorzugt weist das Gummimaterial der Capschichten eine Shore-A-Härte von 55 ShA bis 75 ShA auf. Die radial äußere Capschicht weist an nicht profilierten Stellen in radialer Richtung eine Dicke von 2,0 mm bis 4,0 mm auf, die radial innere Capschicht weist an nicht profilierten Stellen in radialer Richtung eine Dicke von 2,0 mm bis 8,0 mm auf. Die jeweils vorgesehene Profiltiefe ergibt sich im Wesentlichen aus der Summe der beiden Dicken. Bei entsprechender Auslegung der Dicken beträgt die Profiltiefe beispielsweise 4,0 mm oder 6,0 mm.

Die EP 1 745 946 A1 offenbart einen Fahrzeugluftreifen mit einem Laufstreifen mit den Gürtelverband kontaktierenden, bis zur Laufstreifenaußenseite reichenden Laufstreifenteilen aus einem Gummimaterial mit einer Shore A -Härte von 45 ShA bis 70 ShA und mit in diesen Laufstreifenteilen eingebauten, ebenfalls bis zur Laufstreifenaußenseite reichenden Laufstreifenteilen aus einem Gummimaterial mit einer Shore A - Härte von 50 ShA bis 75 ShA.

Aus der EP 2 565 056 A1 ist ein Fahrzeugluftreifen mit einem Laufstreifen mit einer Laufstreifenbase und einer Laufstreifencap mit zwei Capschichten bekannt. Die Laufstreifenbase besteht aus einem Gummimaterial mit einer Shore A - Härte von 45 ShA bis 70 ShA. Die eine Capschichicht besteht aus einem Gummimaterial mit einer Shore A - Härte von 50 ShA bis 75 ShA und die andere Capschicht besteht aus einem Gummimaterial mit einer Shore A - Härte von 55 ShA bis 80 ShA.

Die EP 1 990 217 A1 offenbart einen Fahrzeugluftreifen, insbesondere einen Winterreifen, mit einem Laufstreifen mit einer Laufstreifenbase und einer Laufstreifencap. Das Gummimaterial der Laufstreifencap weist eine Shore A-Härte von beispielsweise 62 ShA auf.

Die WO 2019 102 1498 A1, welche einen Stand der Technik nach Art 54(3) EPÜ bildet, offenbart einen PKW-Reifen mit einem Laufstreifen mit einer in radialer Richtung ermittelten Dicke von 5,0 mm bis 8,0 mm, wobei das Gummimaterial des Laufstreifens eine Shore A-Härte von 45 ShA bis 65 ShA aufweist.

Sommerreifen und Ganzjahresreifen weisen üblicherweise Laufstreifen mit einer Profiltiefe von 6,5 mm bis 8,5 mm auf. In letzter Zeit wurde die Profiltiefe der Laufstreifen dieser Reifen tendenziell immer geringer gewählt, um den Rollwiderstand zu reduzieren. Es hat sich dabei gezeigt, dass die Abnahme der Profiltiefe das Biege- bzw. Deformationsverhalten der Profilpositive auf eine für die Bremseigenschaften auf trockner und nasser Fahrbahn ungünstige Weise verändert bzw. beeinflusst.

Der Erfindung liegt daher die Aufgabe zugrunde, bei einem Fahrzeugluftreifens der eingangs genannten Art, die Trocken und - Nassbremseigenschaften zu verbessern.

Gelöst wird die gestellte Aufgabe erfindungsgemäß dadurch, dass die Profilblockreihen und/oder Profilrippen in Umfangsrichtung hintereinander angeordnete Einschnitte aufweisen, wobei die Gesamtanzahl von Einschnitten innerhalb jeder Profilblockreihe und/oder Profilrippe maximal 150 beträgt, wobei unter einem Einschnitt eine schmale Rille verstanden wird, welche sich in Draufsicht unter einem um bis zu 45° von der Querrichtung abweichenden Winkel erstreckt, in radialer Richtung eine Tiefe von mindestens 2,0 mm, an der Laufstreifenperipherie eine Breite von 0,4 mm bis 1,0 mm, insbesondere von bis zu 0,8 mm, und eine Erstreckungslänge, ermittelt an einer in Erstreckungsrichtung ausgerichteten Mittellinie, von mindestens 8,0 mm aufweist.

Der erfindungsgemäße Fahrzeugluftreifen weist - im Vergleich zu den bisher bekannten Ganzjahres- und Sommerreifen - einen deutlich weicheren Laufstreifen bzw. eine deutlich weichere radial äußerste Laufstreifenschicht im Laufstreifen auf. Für Sommer- und Ganzjahresreifen sind Laufstreifen aus einem Gummimaterial mit einer Shore A-Härte von 62 ShA bis 68 ShA üblich und bekannt, mit welchen sich gute Handlingeigenschaften, zu welchen beispielsweise das Ansprechverhalten auf Lenkkräfte sowie die Übertragung von Seitenkräften auf die Fahrbahn gehören, erzielen lassen.

Bei Winterreifen sind hingegen Laufstreifen aus einem Gummimaterial mit einer Shore A-Härte von 55 ShA bis 65 ShA üblich, beispielsweise erwähnt die DE 10 2012 108 247 A1 einen Winterreifen-Laufstreifen mit einer Shore A-Härte von 50 ShA bis 60 ShA. Ein Laufstreifen aus einem Gummimaterial mit einer Härte größer 65 ShA wirkt sich bei Winterreifen nachteilig auf den gewünschten "Verzahnungseffekt" der in den Profilpositiven des Laufstreifens üblicherweise ausgebildeten Einschnitte aus. In Laufstreifen für Winterreifen, die aus einem Gummimaterial mit einer Härte unterhalb 50 ShA bestehen, neigen die durch die Einschnitte gebildeten Profilpositivsegmente beim Abrollen des Laufstreifens zum Verkippen, wodurch die Kontaktfläche des Laufstreifens zur Fahrbahn bzw. zum Untergrund deutlich reduziert ist.

Beim erfindungsgemäß ausgeführten Sommer- bzw. Ganzjahresreifen bewirkt die für diesen Reifentyp unüblich geringe Shore A-Härte des Gummimaterials des Laufstreifens bzw. der radial äußersten Laufstreifenschicht gemeinsam mit der geringen Profiltiefe von maximal 6,5 mm eine deutliche Verbesserung der Nass- und Trockenbremseigenschaften, wie auch Testergebnisse gezeigt haben (siehe Tabelle 3). Insbesondere überwindet ein erfindungsgemäßer Fahrzeugluftreifen damit das in der Fachwelt vorherrschende Vorurteil, dass "weiche" Laufstreifen schlechte Handlingeigenschaften zeigen. Bei Sommerreifen und Ganzjahresreifen lassen sich mit weichen Laufstreifen nämlich aufgrund der geringen Anzahl von Einschnitten in Kombination mit der geringen Profiltiefe von bis 6,5 mm sehr gute Handlingeigenschaften erzielen.

Gemäß einer bevorzugten Ausführungsvariante beträgt die Shore A-Härte bei Raumtemperatur gemäß DIN ISO 7619-1 des Gummimateriales des Laufstreifens bzw. der radial äußersten Laufstreifenschicht höchstens 52 ShA, insbesondere bis zu 50 ShA. In diesen bevorzugten Härtebereichen lassen noch bessere Trockenbremseigenschaften erreichen (siehe Testergebnisse in Tabelle 3).

Gemäß einer weiteren bevorzugten Ausführungsvariante weist das Gummimaterial des Laufstreifens bzw. der radial äußersten Laufstreifenschicht einen dynamischen Speichermodul bei 8% Dehnung und 55°C gemäß DIN 53 513, ermittelt mit dynamisch mechanischer Messung mit Dehnungsdurchlauf, von 2,5 MPa bis 4,5 MPa, insbesondere von höchstens 4,0 MPa, und vorzugsweise von höchstens 3,6 MPa auf. Dieser Speichermodul ist, ähnlich wie die Shore A-Härte, ein Maß für die Steifigkeit des Gummimateriales.

Die beschriebenen Effekte treten dann besonders zum Vorschein, wenn die Profiltiefe des Laufstreifens höchstens 6,0 mm, insbesondere höchstens 5,5 mm, beträgt. Ein Reifen mit einer derart geringen Profiltiefe zeigt zusätzlich einen besonders geringen Rollwiderstand.

Im Hinblick auf das Wasseraufnahme- und Wasserdrainagevermögen des Laufstreifens ist es vorteilhaft, wenn die Profiltiefe des Laufstreifens mindestens 4,5 mm, insbesondere mindestens 5,0 mm, beträgt.

Bevorzugter Weise ist der einschichtige Laufstreifen oder die radial äußerste Schicht des mehrschichtigen Laufstreifens aus einer Kautschukmischung gefertigt, welche folgendes enthält:
- einen Kautschuk mit einer Glasübergangstemperatur von kleiner -35°C oder ein Gemisch aus zumindest zwei Kautschuken mit einer gemittelten Glasübergangstemperatur von kleiner -35°C,
- 30 phr bis 250 phr Kieselsäure(n),
- 5,0 phr bis 70 phr flüssiges Polymer bzw. flüssige Polymere,
- 5,0 phr bis 75 phr Harz(e),
- 3,0 phr bis 25,0 phr Aktivator(en),
- 0,5 phr bis 6,0 phr Beschleuniger,
- 0,5 phr bis 5,0 phr eines Schwefels und/oder Schwefelspenders.

Weitere bevorzugte Mengenbereiche und spezifische Mischungsbestandteile der Kautschukmischung tragen dazu bei, die Reifeneigenschaften in den gewünschten Bereichen gezielt zu variieren und/oder diese derart auf den jeweiligen Reifen bzw. dessen Laufstreifenprofil abzustimmen. Es ist dabei von Vorteil, wenn die Kautschukmischung Folgendes enthält:
- Kautschuk mit einer Glasübergangstemperatur von kleiner -55°C oder ein Gemisch aus zumindest zwei Kautschuken mit einer gemittelten Glasübergangstemperatur von kleiner -55°C,
- 50 phr bis 100 phr Styrol-Butadien-Kautschuk(e), insbesondere modifizierten Lösungs-SBR, und/oder
- 60 phr bis 150 phr Kieselsäure(n) und/oder
- 10 phr bis 50 phr flüssiges Polymer bzw. flüssige Polymere, wobei vorzugsweise zumindest flüssiges Polybutadien enthalten ist und/oder
- 10 phr bis 50 phr Harz(e) und/oder
- als Aktivator(en) zumindest ein geblocktes und/oder ungeblocktes Mercaptosilan, insbesondere 5,0 phr bis 15,0 phr, vorzugsweise 7,0 phr von 13,0 phr, geblocktes und/oder ungeblocktes Mercaptosilan(e).

Weitere Merkmale, Vorteile und Einzelheiten der Erfindung werden nun anhand der nachfolgenden Beschreibung näher erläutert.

Die Erfindung betrifft einen Fahrzeugluftreifen in Radialbauart, welcher ein Sommer- oder ein Ganzjahresreifen (All-Season-Tire) für Personenkraftwagen, Vans oder Light-Trucks ist.

Das Laufstreifenprofil von Sommer- und Ganzjahresreifen unterscheidet sich vom Laufstreifenprofil von Winterreifen bekannter Weise insbesondere durch die Anzahl der in den Profilpositiven des Laufstreifens ausgebildeten Einschnitte, also in seiner Einschnittdichte.

Unter einem "Einschnitt" wird im Rahmen der gegenständlichen Erfindung eine in einem Profilpositiv ausgebildete schmale Rille verstanden, welche sich in Draufsicht unter einem um bis zu 45° von der Querrichtung abweichenden Winkel erstreckt, in radialer Richtung eine Tiefe von mindestens 2,0 mm, an der Laufstreifenperipherie eine Breite von 0,4 mm bis 1,0 mm, insbesondere von bis zu 0,8 mm, und eine Erstreckungslänge, ermittelt an einer in Erstreckungsrichtung ausgerichteten Mittellinie, von mindestens 8,0 mm aufweist. Sehr kurze Einschnitte, wie sie sich häufig an spitzwinkeligen Randbereichen von Profilpositiven befinden, bleiben daher bei der Ermittlung der Einschnittdichte unberücksichtigt.

Zur Ermittlung der Einschnittdichte wird die Anzahl von in Umfangsrichtung aufeinanderfolgenden Einschnitten in einem in Umfangsrichtung umlaufenden Profilpositiv des Laufstreifens betrachtet. Ein "in Umfangsrichtung umlaufendes Profilpositiv" ist dabei ein Profilpositiv, welches entweder in bekannter Weise durch Quer- bzw. Schrägrillen in Profilblöcke gegliedert ist (üblicherweise Profilblockreihe genannt) oder welches mit sacknutartig in seinem Inneren endenden Quer- bzw. Schrägrillen und/oder Einschnitten, insbesondere block- oder segmentartig, strukturiert ist (üblicherweise Profilband oder Profilrippe genannt).

Ein Sommer- bzw. Ganzjahresreifen weist - im Gegensatz zu Winterreifen - innerhalb von jedem in Umfangsrichtung umlaufenden Profilpositiv des Laufstreifens maximal 150, insbesondere maximal 130, in Umfangsrichtung hintereinander angeordnete bzw. ausgebildete Einschnitte auf.

Der erfindungsgemäße Fahrzeugluftreifen weist ferner einen Laufstreifen mit zumindest einem Laufstreifenteil aus einem speziellen Gummimaterial auf. Die weiteren Bauteile des Reifens, zu welchen insbesondere eine Karkasseinlage, ein Gürtelverband, eine Innenschicht und Wulstkerne gehören, können in bekannter Weise ausgeführt sein.

Der Laufstreifen ist mit einer Profilierung versehen, welche auf die vorgesehene Profiltiefe, diese ist die maximal vorgesehene Tiefe von Rillen, ausgeführte Hauptrillen, insbesondere Umfangsrillen oder Schrägrillen, umfasst, wobei die Profiltiefe 4,5 mm bis 6,5 mm, insbesondere höchstens 6,0 mm, vorzugsweise 5,0 mm bis 5,5 mm, beträgt. Ferner kann der Laufstreifen mit insbesondere in bekannter Weise ausgeführten Querrillen, Einschnitten und dergleichen versehen sein. Der Laufstreifen ist ein einschichtig aufgebauter Monolaufstreifen aus einem einzigen Gummimaterial oder ein in radialer Richtung mehrschichtig, insbesondere zweischichtig, aufgebauter Laufstreifen. Bei einem zweischichtig aufgebauten Laufstreifen erstreckt sich die radial äußerste Schicht jeweils über die gesamte Breite des Laufstreifens oder zumindest über die gesamte Breite der Bodenaufstandsfläche des Laufstreifens. Die Bodenaufstandsfläche entspricht dabei dem statisch ermittelten Footprint (ermittelt mit einem auf einer Normfelge montierten Reifen, Last bei 70 % der maximalen Tragfähigkeit, Innendruck 85 % des Normdruckes, gemäß ETRTO-Standards).

Das Gummimaterial des Monolaufstreifens bzw. der radial äußerste Laufstreifenschicht weist, wie weiter unten noch erläutert wird, eine besonders geringe Shore A-Härte auf. Bei einem mehrschichtig aufgebauten Laufstreifen ist die Dicke der radial äußersten Gummischicht bevorzugter Weise derart gewählt, dass die Profilierung komplett in der radial äußersten Gummischicht ausgebildet ist.

Die nachfolgende Tabelle 1 enthält Beispiele A, B, C, D für Zusammensetzungen von Kautschukmischungen, aus welchen das Gummimaterial des Laufstreifens bzw. der radial äußersten Laufstreifenschicht im Zuge der Reifenvulkanisation gebildet wird. Die Mengen der Bestandteile der Kautschukmischungen sind in der in der Kautschuktechnologie üblichen Einheit phr (parts per hundred parts rubber) angegeben. Die Mengenangaben beziehen sich dabei jeweils auf 100 Massenteile des Grundpolymers bzw. bei Polymerblends auf jene der Grundpolymere. Ferner ist in Tabelle 1 auch eine Zusammensetzung für eine Referenzmischung Ref. angegeben. Das in den Beispielen C und D vorgesehene flüssige Polybutadien dient als Weichmacher und zählt daher nicht zu den Grundpolymeren.

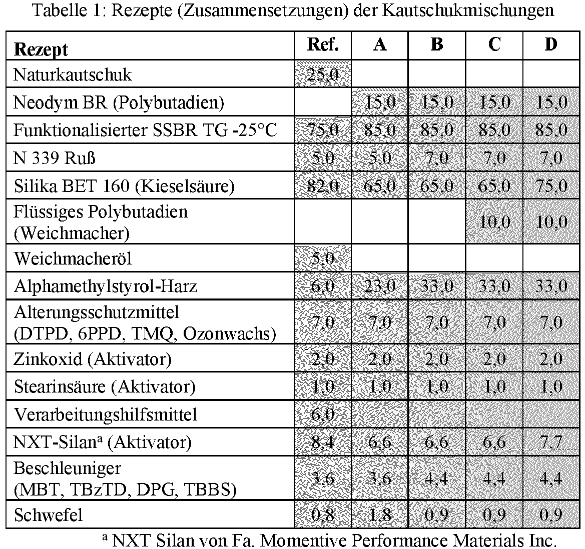

Eine für den Laufstreifen bzw. die radial äußerste Laufstreifenschicht vorgesehene Kautschukmischung enthält:
- einen Kautschuk mit einer Glasübergangstemperatur (T_{g}) von < -35°C, insbesondere von < -55°C, oder
   ein Gemisch aus zumindest zwei Kautschuken, welches eine - bezogen auf die Summe der Massen der Kautschuke - gemittelte Glasübergangstemperatur (T_{g}) von < -35°C, insbesondere von < -55°C, aufweist,
- wobei vorzugsweise 50 phr bis 100 phr Styrol-Butadien-Kautschuk(e), insbesondere funktionalisierter (modifizierter) S-SBR (Lösungs-SBR), enthalten ist bzw. sind,
   - 30 phr bis 250 phr, insbesondere 60 phr bis 150 phr, Kieselsäure(n),
   - 5,0 phr bis 70 phr, insbesondere 10 phr bis 50 phr, flüssiges Polymer bzw. flüssige Polymere,
- wobei vorzugsweise zumindest flüssiges Polybutadien enthalten ist,
   - 5,0 phr bis 75 phr, insbesondere 10 phr bis 50 phr, Harz(e),
   - 3,0 phr bis 25,0 phr Aktivator(en),
- wobei vorzugsweise zumindest ein geblocktes oder ungeblocktes Mercaptosilan enthalten ist,
   wobei Mercaptosilan(e) insbesondere in einer Menge von 5,0 phr bis 15,0 phr, vorzugsweise von 7,0 phr von 13,0 phr, enthalten ist bzw. sind,
   - 0,5 phr bis 6,0 phr, insbesondere bis zu 4,0 phr, Beschleuniger und
   - 0,5 phr bis 5,0 phr zumindest eines Schwefels und/oder Schwefelspenders.

Der funktionalisierte S-SBR weist in bekannter Weise funktionelle Gruppen an den Kettenenden seiner Kautschukmoleküle auf, welche eine chemische Bindung mit Kieselsäure eingehen können.

In erfindungsmäßigen Kautschukmischungen können ungeblockte Mercaptosilane und/oder geblockte Mercaptosilane, wie beispielsweise NXT-Silan, NXTlow VOC, NXT-Z45, NXT-Z60, NXT-Z100 (von Momentive Performence Materials INC.) oder SI363 (von Evonik Industries AG) verwendet werden.

Die in Tabelle 1 angegebenen Kautschukmischungen wurden, wie nachfolgend erläutert, hergestellt und aus diesen Kautschukmischungen hergestellte Vulkanisate wurden, wie ebenfalls nachfolgend erläutert, geprüft.

Die Herstellung der Kautschukmischungen erfolgte nach dem in der Kautschukindustrie üblichen Verfahren unter den üblichen Bedingungen in zwei Mischstufen in einem Mischaggregat. In der ersten Mischstufe (Grundmischstufe) wurden alle Bestandteile der jeweiligen Kautschukmischung, mit Ausnahme von Schwefel und Beschleuniger(n), für einen Zeitraum von 200 bis 600 Sekunden bei einer Mischtemperatur von 145°C bis 185°C, Zieltemperatur von 150°C bis 175°C, vermischt. In der zweiten Mischstufe (Fertigmischstufe) wurden Schwefel und Beschleuniger zur im Zuge der ersten Mischstufe erhaltenen Kautschukmischung hinzugefügt und derart die fertige Kautschukmischung hergestellt, wobei im Rahmen der zweiten Mischstufe für einen Zeitraum von 180 bis 300 Sekunden bei einer Mischtemperatur von 90°C bis 120°C gemischt wurde.

Aus sämtlichen Kautschukmischungen wurden genormte Prüfkörper durch Vulkanisation hergestellt und es wurden mit diesen Prüfkörpern einige typische Vulkanisateigenschaften bestimmt. Folgende Prüfungen wurden durchgeführt:
- Shore A-Härte bei Raumtemperatur (25°C) gemäß DIN ISO 7619-1,
- Rückprallelastizität bei Raumtemperatur (25°C) gemäß DIN 53 512,
- Rückprallelastizität bei 70°C gemäß DIN 53 512,
- Zugversuch bei Raumtemperatur (25°C) gemäß DIN 53 504,
- Dynamischer Speichermodul bei 0,15% Dehnung (E'_{0,15%}) und bei 8% Dehnung (E'_{8%}) sowie maximaler Verlustfaktor (tan dₘₐₓ) bei 55°C aus dynamischmechanischer Messung gemäß DIN 53 513, Dehnungsdurchlauf ("strain sweep")

Diese Vulkanisateigenschaften erlauben es, Rückschlüsse über die zu erwartenden Eigenschaften zu ziehen, welche einen aus einer solchen Kautschukmischung gefertigten Laufstreifen bzw. eine aus einer solchen Kautschukmischung gefertigte radial äußerste Laufstreifenschicht aufweisen.

Die Rückprallelastizität bei Raumtemperatur kann dabei als Indikator für die Bremseigenschaften des Fahrzeugluftreifens auf nasser Fahrbahn (Nassbremseigenschaften) herangezogen werden. Die Rückprallelastizität bei Raumtemperatur ist dabei ein Maß für die Dämpfung, wobei die Dämpfung umso höher ist, je geringer die Rückprallelastizität ist. Bei geringerer Rückprallelastizität (höherer Dämpfung) des beim Abrollen des Reifens mit dem Untergrund in Kontakt tretenden Gummimateriales wird mehr Energie "vernichtet", wodurch die Bremseigenschaften des Reifens verbessert werden.

Die Rückprallelastizität bei 70°C dient als Indikator für den Rollwiderstand des Reifens, wobei eine hohe Rückprallelastizität einen geringen Rollwiderstand bedeutet.

Der maximale Verlustfaktor (tan dₘₐₓ) ist ein weiterer Indikator für den Rollwiderstand des Reifens, wobei Laufstreifen aus einem Gummimaterial mit geringerem Verlustfaktor eine geringere Dämpfung aufweisen, sodass Reifen mit solchen Laufstreifen einen geringen Rollwiderstand zeigen.

Die Shore A-Härte und der dynamische Speichermodul sind insbesondere jeweils ein Maß für die Steifigkeit der Vulkanisate.

In Tabelle 2 sind die Ergebnisse der Prüfungen der Vulkanisateigenschaften zusammengefasst.

**Tabelle 2: Ergebnisse der Prüfungen der Vulkanisateigenschaften**

| | | **Einheit** | **Ref.** | **A** | **B** | **C** | **D** |
|---|---|---|---|---|---|---|---|
| Shore - Härte | Shore A-Härte bei Raumtemperatur | ShA | 68,2 | 53,8 | 51,2 | 52,4 | 49,1 |
| Rückprall | Rückprallelastizität bei Raumtemperatur | % | 26,3 | 17,7 | 14,6 | 16,8 | 16,9 |
| | Rückprallelastizität bei 70°C | % | 57,8 | 63,4 | 62,1 | 61,2 | 57,4 |
| Eplexor | E'_{0,15%} | MPa | 11,8 | 5,4 | 4,6 | 4,5 | 4,3 |
| | E'_{8%} | MPa | 6,0 | 4,4 | 3,8 | 3,9 | 3,5 |
| | tan dₘₐₓ | - | 0,152 | 0,114 | 0,114 | 0,113 | 0,134 |

Das Gummimaterial des Laufstreifens bzw. der radial äußersten Laufstreifenschicht weist eine Shore A-Härte bei Raumtemperatur von 40 ShA (Shore A) bis 55 ShA, insbesondere von bis zu 52 ShA, vorzugsweise von bis zu 50 ShA, und besonders bevorzugter Weise von höchstens 49 ShA auf. Ferner weist das Gummimaterial des Laufstreifens bzw. der radial äußersten Laufstreifenschicht einen dynamischen Speichermodul bei 8% Dehnung und 55°C (E'_{8%}) von 2,5 MPa bis 4,5 MPa, insbesondere von höchstens 4,0 MPa, und besonders bevorzugter Weise von höchstens 3,6 MPa auf.

Reifen der Dimension 205/55 R 16 wurden mit einem einschichtigen Laufstreifen mit einem für Sommerreifen üblichen Profil, wobei der Laufstreifen aus den Kautschukmischungen Ref, A, B, C oder D gefertigt wurde, hergestellt. Die Profiltiefe betrug bei sämtlichen Reifen 6,0 mm. Die Nassbremseigenschaften und die Trockenbremseigenschaften der Reifen wurden getestet. Die Testbedingungen waren dabei folgende:

**Test für Nassbremsen**

| | |
|---|---|
| Fahrzeug: | Golf 7 |
| Lufttemperatur: | 20°C bis 21°C |
| Fahrbahn: | Nasser Asphalt mit hohem Reibungskoeffizienten (Reibungskoeffizient des Referenzreifens 0,812); Nasser Asphalt mit niedrigem Reibungskoeffizienten (Reibungskoeffizient des Referenzreifens 0,642) |
| Fahrbahntemperatur: | 20°C |

**Test für Trockenbremsen:**

| | |
|---|---|
| Fahrzeug: | Golf 7 |
| Lufttemperatur: | 24°C |
| Fahrbahn: | Trockener Asphalt (Reibungskoeffizient des Referenzreifens: 1,041) |
| Fahrbahntemperatur: | 20°C bis 21°C |

Tabelle 3 enthält die Ergebnisse der Reifentests, wobei die Werte für den Referenzreifen mit dem Laufstreifen aus der Kautschukmischung Ref. auf 100,0 festgelegt wurde. Werte größer 100 deuten eine Verbesserung der jeweiligen Reifeneigenschaft gegenüber dem Referenzreifen an.

**Tabelle 3: Ergebnisse der Reifentests und Shore A-Härte des Gummimaterials des Laufstreifens**

| | | **Ref.** | **A** | **B** | **c** | **D** |
|---|---|---|---|---|---|---|
| Härte bei Raumtemperatur | ShA | 68,2 | 53,8 | 51,2 | 52,4 | 49,1 |
| Rückprallelastizität bei Raumtemperatur | % | 26,3 | 17,7 | 14,6 | 16,8 | 16,9 |
| E'_{0,15%} | MPa | 11,8 | 5,4 | 4,6 | 4,5 | 4,3 |
| E'_{8%} | MPa | 6,0 | 4,4 | 3,8 | 3,9 | 3,5 |
| Nassbremsen | - | 100,0 | 101,0 | 101,4 | 100,7 | 105,7 |
| Trockenbremsen | - | 100,0 | 103,7 | 104,7 | 103,9 | 106,0 |

Gemäß Tabelle 3 zeigen die Reifen mit einem Laufstreifen, welcher aus einer der Kautschukmischungen A, B, C, D gefertigt wurde, verbesserte Nassbrems- und Trockenbremseigenschaften. Es kann davon ausgegangen werden, dass diese Verbesserung hauptsächlich auf die geringere Härte der Vulkanisate der Kautschukmischungen A, B, C, D gegenüber dem Vulkanisat der Kautschukmischung Ref. zurückzuführen ist. Ein Laufstreifen mit geringerer Härte dürfte die Größe und die Form der Kontaktfläche zwischen dem Laufstreifen und der Fahrbahn auf eine für die Bremseigenschaften vorteilhafte Weise beeinflussen. Dies bewahrheitet sich jedoch nur bei Laufstreifen, welche eine relativ geringe Einschnittdichte und daher ausreichend große Profilpositivsegmente aufweisen, also bei Laufstreifen mit einer entsprechend hohen "mechanischen Steifigkeit". Diese ist bei Laufstreifenprofilen von Sommer- und bei Ganzjahresreifen gegeben.

Im Hinblick auf die verbesserten Nassbremseigenschaften wird vermutet, dass ferner auch die geringe Rückprallelastizität bei Raumtemperatur einen Beitrag leistet.

## Patentansprüche

1. Fahrzeugluftreifen in Radialbauart mit einem profilierten Laufstreifen mit in Umfangsrichtung umlaufenden Profilblockreihen und/oder Profilrippen,
wobei der Laufstreifen einschichtig oder mehrschichtig mit einer radial äußersten Laufstreifenschicht ausgeführt ist, welche sich zumindest über die Breite der Bodenaufstandsfläche erstreckt,
wobei der Laufstreifen bzw. seine radial äußerste Laufstreifenschicht aus einem Gummimaterial mit einer Shore A-Härte bei Raumtemperatur gemäß DIN ISO 7619-1 von 40 ShA bis 55 ShA besteht
und wobei die Profiltiefe des Laufstreifens bis zu 6,5 mm beträgt,
**dadurch gekennzeichnet,**
**dass** die Profilblockreihen und/oder Profilrippen in Umfangsrichtung hintereinander angeordnete Einschnitte aufweisen, wobei die Gesamtanzahl von Einschnitten innerhalb jeder Profilblockreihe und/oder Profilrippe maximal 150 beträgt, wobei unter einem Einschnitt eine schmale Rille verstanden wird, welche sich in Draufsicht unter einem um bis zu 45° von der Querrichtung abweichenden Winkel erstreckt, in radialer Richtung eine Tiefe von mindestens 2,0 mm, an der Laufstreifenperipherie eine Breite von 0,4 mm bis 1,0 mm, insbesondere von bis zu 0,8 mm, und eine Erstreckungslänge, ermittelt an einer in Erstreckungsrichtung ausgerichteten Mittellinie, von mindestens 8,0 mm aufweist.

2. Fahrzeugluftreifen nach Anspruch 1, **dadurch gekennzeichnet, dass** die Shore A-Härte bei Raumtemperatur gemäß DIN ISO 7619-1 des Gummimateriales des Laufstreifens bzw. der radial äußersten Laufstreifenschicht höchstens 52 ShA, insbesondere bis zu 50 ShA, beträgt.

3. Fahrzeugluftreifen nach Anspruch 1 oder 2, **dadurch gekennzeichnet, dass** das Gummimaterial des Laufstreifens bzw. der radial äußersten Laufstreifenschicht einen dynamischen Speichermodul bei 8% Dehnung und 55°C (E'_{8%}) gemäß DIN 53 513, ermittelt mit dynamisch mechanischer Messung mit Dehnungsdurchlauf, von 2,5 MPa bis 4,5 MPa, insbesondere von höchstens 4,0 MPa, und vorzugsweise von höchstens 3,6 MPa aufweist.

4. Fahrzeugluftreifen nach einem der Ansprüche 1 bis 3, **dadurch gekennzeichnet, dass** die Profiltiefe des Laufstreifens höchstens 6,0 mm, insbesondere höchstens 5,5 mm, beträgt.

5. Fahrzeugluftreifen nach einem der Ansprüche 1 bis 4, **dadurch gekennzeichnet, dass** die Profiltiefe des Laufstreifens mindestens 4,5 mm, insbesondere mindestens 5,0 mm, beträgt.

6. Fahrzeugluftreifen nach einem der Ansprüche 1 bis 5, **dadurch gekennzeichnet, dass** der einschichtige Laufstreifen oder die radial äußerste Schicht des mehrschichtigen Laufstreifens aus einer Kautschukmischung gefertigt ist, welche folgendes enthält:
- einen Kautschuk mit einer Glasübergangstemperatur (T_{g}) von kleiner -35°C oder
ein Gemisch aus zumindest zwei Kautschuken mit einer gemittelten Glasübergangstemperatur (T_{g}) von kleiner -35°C,
- 30 phr bis 250 phr Kieselsäure(n),
- 5,0 phr bis 70 phr flüssiges Polymer bzw. flüssige Polymere,
- 5,0 phr bis 75 phr Harz(e),
- 3,0 phr bis 25,0 phr Aktivator(en),
- 0,5 phr bis 6,0 phr Beschleuniger,
- 0,5 phr bis 5,0 phr eines Schwefels und/oder Schwefelspenders.

7. Fahrzeugluftreifen nach Anspruch 6, **dadurch gekennzeichnet, dass** die Kautschukmischung des Laufstreifens bzw. der radial äußersten Schicht des Laufstreifens einen Kautschuk mit einer Glasübergangstemperatur (T_{g}) von kleiner -55°C oder ein Gemisch aus zumindest zwei Kautschuken mit einer gemittelten Glasübergangstemperatur (T_{g}) von kleiner -55°C enthält.

8. Fahrzeugluftreifen nach Anspruch 6 oder 7, **dadurch gekennzeichnet, dass** die Kautschukmischung des Laufstreifens bzw. der radial äußersten Schicht des Laufstreifens 50 phr bis 100 phr Styrol-Butadien-Kautschuk(e), insbesondere modifizierten Lösungs-SBR, enthält.

9. Fahrzeugluftreifen nach einem der Ansprüche 6 bis 8, **dadurch gekennzeichnet, dass** die Kautschukmischung des Laufstreifens bzw. der radial äußersten Schicht des Laufstreifens 60 phr bis 150 phr Kieselsäure(n) enthält.

10. Fahrzeugluftreifen nach einem der Ansprüche 6 bis 9, **dadurch gekennzeichnet, dass** die Kautschukmischung des Laufstreifens bzw. der radial äußersten Schicht des Laufstreifens 10 phr bis 50 phr flüssiges Polymer bzw. flüssige Polymere enthält, wobei vorzugsweise zumindest flüssiges Polybutadien enthalten ist.

11. Fahrzeugluftreifen nach einem der Ansprüche 6 bis 10, **dadurch gekennzeichnet, dass** die Kautschukmischung des Laufstreifens bzw. der radial äußersten Schicht des Laufstreifens 10 phr bis 50 phr Harz(e) enthält.

12. Fahrzeugluftreifen nach einem der Ansprüche 6 bis 11, **dadurch gekennzeichnet, dass** die Kautschukmischung des Laufstreifens bzw. der radial äußersten Schicht des Laufstreifens als Aktivator(en) zumindest ein geblocktes und/oder ungeblocktes Mercaptosilan enthält.

13. Fahrzeugluftreifen nach Anspruch 12, **dadurch gekennzeichnet, dass** die Kautschukmischung des Laufstreifens bzw. der radial äußersten Schicht des Laufstreifens insgesamt 5,0 phr bis 15,0 phr, vorzugsweise 7,0 phr von 13,0 phr, geblocktes und/oder ungeblocktes Mercaptosilan(e) enthält.

## Claims

1. Pneumatic vehicle tyre in radial design with a profiled tread comprising rows of profile blocks and/or profile ribs running around the tyre in circumferential direction, wherein the tread is in the form of a single layer or multiple layers with a radially outermost tread layer that extends at least over the width of the ground contact area,
wherein the tread or its radially outermost tread layer consists of a rubber material with a Shore A hardness at room temperature in accordance with DIN ISO 7619-1 of 40 ShA to 55 ShA,
and wherein the profile depth of the tread is up to 6.5 mm,
**characterized in that**
the rows of profile blocks and/or profile ribs have sipes arranged in succession in circumferential direction, wherein the total number of sipes within each row of profile blocks and/or profile rib is not more than 150, a sipe being understood to mean a narrow groove that extends at an angle that varies from perpendicular direction by up to 45° in top view and has a depth in radial direction of at least 2.0 mm, a width at the tread periphery of 0.4 mm to 1.0 mm, especially of up to 0.8 mm, and a longitudinal extent, ascertained at a centre line in the direction of extension, of at least 8.0 mm.

2. Pneumatic vehicle tyre according to Claim 1, **characterized in that** the Shore A hardness at room temperature in accordance with DIN ISO 7619-1 of the rubber material of the tread or of the radially outermost tread layer is not more than 52 ShA, especially up to 50 ShA.

3. Pneumatic vehicle tyre according to Claim 1 or 2, **characterized in that** the rubber material of the tread or of the radially outermost tread layer has a dynamic storage modulus at 8% elongation and 55°C (E'_{8%}) in accordance with DIN 53 513, ascertained by dynamic-mechanical measurement with a strain sweep, of 2.5 MPa to 4.5 MPa, especially of not more than 4.0 MPa, and preferably of not more than 3.6 MPa.

4. Pneumatic vehicle tyre according to any of Claims 1 to 3, **characterized in that** the profile depth of the tread is not more than 6.0 mm, especially not more than 5.5 mm.

5. Pneumatic vehicle tyre according to any of Claims 1 to 4, **characterized in that** the profile depth of the tread is at least 4.5 mm, especially at least 5.0 mm.

6. Pneumatic vehicle tyre according to any of Claims 1 to 5, **characterized in that** the single-layer tread or the radially outermost layer of the multilayer tread is manufactured from a rubber mixture comprising the following:
- a rubber having a glass transition temperature (T_{g}) of lower than -35°C or a mixture of at least two rubbers having an average glass transition temperature (T_{g}) of lower than -35°C,
- 30 phr to 250 phr of silica(s),
- 5.0 phr to 70 phr of liquid polymer(s),
- 5.0 phr to 75 phr of resin(s),
- 3.0 phr to 25.0 phr of activator(s),
- 0.5 phr to 6.0 phr of accelerator(s),
- 0.5 phr to 5.0 phr of sulfur or a sulfur donor.

7. Pneumatic vehicle tyre according to Claim 6, **characterized in that** the rubber mixture of the tread or of the radially outermost layer of the tread comprises a rubber having a glass transition temperature (T_{g}) of lower than -55°C or a mixture of at least two rubbers having an average glass transition temperature (T_{g}) of lower than -55°C.

8. Pneumatic vehicle tyre according to Claim 6 or 7, **characterized in that** the rubber mixture of the tread or of the radially outermost layer of the tread contains 50 phr to 100 phr of styrene-butadiene rubber(s), especially modified solution SBR.

9. Pneumatic vehicle tyre according to any of Claims 6 to 8, **characterized in that** the rubber mixture of the tread or of the radially outermost layer of the tread contains 60 phr to 150 phr of silica(s).

10. Pneumatic vehicle tyre according to any of Claims 6 to 9, **characterized in that** the rubber mixture of the tread or of the radially outermost layer of the tread contains 10 phr to 50 phr of liquid polymer(s), preferably including at least liquid polybutadiene.

11. Pneumatic vehicle tyre according to any of Claims 6 to 10, **characterized in that** the rubber mixture of the tread or of the radially outermost layer of the tread contains 10 phr to 50 phr of resin(s).

12. Pneumatic vehicle tyre according to any of Claims 6 to 11, **characterized in that** the rubber mixture of the tread or of the radially outermost layer of the tread contains at least one blocked and/or unblocked mercaptosilane as activator(s).

13. Pneumatic vehicle tyre according to Claim 12, **characterized in that** the rubber mixture of the tread or of the radially outermost layer of the tread contains a total of 5.0 phr to 15.0 phr, preferably 7.0 phr of 13.0 phr, of blocked and/or unblocked mercaptosilanes(s).

## Revendications

1. Pneumatique de véhicule de construction radiale comprenant une bande de roulement profilée comprenant des rangées de blocs de profil et/ou des nervures de profil circulant dans la direction circonférentielle, la bande de roulement étant réalisée sous forme monocouche ou multicouche avec une couche de bande de roulement radialement la plus extérieure qui s'étend au moins sur la largeur de la surface de contact avec le sol,
la bande de roulement ou sa couche de bande de roulement radialement la plus extérieure étant constituée d'un matériau de caoutchouc ayant une dureté Shore A à température ambiante selon la norme DIN ISO 7619-1 de 40 ShA à 55 ShA,
et la profondeur de profil de la bande de roulement étant de jusqu'à 6,5 mm, **caractérisé en ce que**
les rangées de blocs de profil et/ou les nervures de profil présentent des entailles agencées les unes derrière les autres dans la direction circonférentielle, le nombre total d'entailles à l'intérieur de chaque rangée de blocs de profil et/ou nervure de profil étant de 150 au maximum, une entaille étant comprise comme une rainure étroite qui, en vue de dessus, s'étend selon un angle s'écartant jusqu'à 45° de la direction transversale, présente une profondeur d'au moins 2,0 mm dans la direction radiale, une largeur de 0,4 mm à 1,0 mm, notamment de jusqu'à 0,8 mm, à la périphérie de la bande de roulement, et une longueur d'extension, déterminée sur une ligne médiane dirigée dans la direction d'extension, d'au moins 8,0 mm.

2. Pneumatique de véhicule selon la revendication 1, **caractérisé en ce que** la dureté Shore A à température ambiante selon la norme DIN ISO 7619-1 du matériau de caoutchouc de la bande de roulement ou de la couche de bande de roulement radialement la plus extérieure est d'au plus 52 ShA, notamment de jusqu'à 50 ShA.

3. Pneumatique de véhicule selon la revendication 1 ou 2, **caractérisé en ce que** le matériau de caoutchouc de la bande de roulement ou de la couche de bande de roulement radialement la plus extérieure présente un module de conservation dynamique à 8 % de déformation et 55 °C (E'_{8%}) selon la norme DIN 53 513, déterminé par mesure mécanique dynamique avec balayage de déformation, de 2,5 MPa à 4,5 MPa, notamment d'au plus 4,0 MPa, et de préférence d'au plus 3,6 MPa.

4. Pneumatique de véhicule selon l'une quelconque des revendications 1 à 3, **caractérisé en ce que** la profondeur de profil de la bande de roulement est d'au plus 6,0 mm, notamment d'au plus 5,5 mm.

5. Pneumatique de véhicule selon l'une quelconque des revendications 1 à 4, **caractérisé en ce que** la profondeur de profil de la bande de roulement est d'au moins 4,5 mm, notamment d'au moins 5,0 mm.

6. Pneumatique de véhicule selon l'une quelconque des revendications 1 à 5, **caractérisé en ce que** la bande de roulement monocouche ou la couche radialement la plus extérieure de la bande de roulement multicouche est fabriquée à partir d'un mélange de caoutchouc, qui contient les éléments suivants :
- un caoutchouc ayant une température de transition vitreuse (T_{g}) inférieure à - 35 °C ou
un mélange d'au moins deux caoutchoucs ayant une température de transition vitreuse moyenne (T_{g}) inférieure à -35 °C,
- 30 pce à 250 pce de silice(s),
- 5,0 pce à 70 pce de polymère liquide ou de polymères liquides,
- 5,0 pce à 75 pce de résine(s),
- 3,0 pce à 25,0 pce d'activateur(s),
- 0,5 pce à 6,0 pce d'accélérateur(s),
- 0,5 pce à 5,0 pce d'un distributeur de soufre et/ou de soufre.

7. Pneumatique de véhicule selon la revendication 6, **caractérisé en ce que** le mélange de caoutchouc de la bande de roulement ou de la couche radialement la plus extérieure de la bande de roulement contient un caoutchouc ayant une température de transition vitreuse (T_{g}) inférieure à -55 °C ou un mélange d'au moins deux caoutchoucs ayant une température de transition vitreuse moyenne (T_{g}) inférieure à -55 °C.

8. Pneumatique de véhicule selon la revendication 6 ou 7, **caractérisé en ce que** le mélange de caoutchouc de la bande de roulement ou de la couche radialement la plus extérieure de la bande de roulement contient 50 pce à 100 pce de caoutchouc(s) de styrène-butadiène, notamment de SBR modifié en solution.

9. Pneumatique de véhicule selon l'une quelconque des revendications 6 à 8, **caractérisé en ce que** le mélange de caoutchouc de la bande de roulement ou de la couche radialement la plus extérieure de la bande de roulement contient 60 pce à 150 pce de silice(s).

10. Pneumatique de véhicule selon l'une quelconque des revendications 6 à 9, **caractérisé en ce que** le mélange de caoutchouc de la bande de roulement ou de la couche radialement la plus extérieure de la bande de roulement contient 10 pce à 50 pce de polymère liquide ou de polymères liquides, au moins du polybutadiène liquide étant de préférence contenu.

11. Pneumatique de véhicule selon l'une quelconque des revendications 6 à 10, **caractérisé en ce que** le mélange de caoutchouc de la bande de roulement ou de la couche radialement la plus extérieure de la bande de roulement contient 10 pce à 50 pce de résine(s).

12. Pneumatique de véhicule selon l'une quelconque des revendications 6 à 11, **caractérisé en ce que** le mélange de caoutchouc de la bande de roulement ou de la couche radialement la plus extérieure de la bande de roulement contient en tant qu'activateur(s) au moins un mercaptosilane bloqué et/ou non bloqué.

13. Pneumatique de véhicule selon la revendication 12, **caractérisé en ce que** le mélange de caoutchouc de la bande de roulement ou de la couche radialement la plus extérieure de la bande de roulement contient au total 5,0 pce à 15,0 pce, de préférence 7,0 pce de 13,0 pce, de mercaptosilane(s) bloqué(s) et/ou non bloqué(s).
